# EUROPEAN PATENT SPECIFICATION

(11) **EP 3 625 394 B1**
(45) Date of publication and mention of the grant of the patent: **22.06.2022**
(21) Application number: 18725806.6
(22) Date of filing: 15.05.2018
(51) Int. Cl.: E02D 27/42, E02D 27/50

(54) **FOUNDATION FOR SUPPORTING A WIND TURBINE, A METHOD FOR MOUNTING THE FOUNDATION, AND A WIND POWER INSTALLATION**
FUNDAMENT ZUR UNTERSTÜTZUNG EINER WINDTURBINE, VERFAHREN ZUR MONTAGE DES FUNDAMENTS UND WINDENERGIEANLAGE
FONDATION POUR PORTER UNE ÉOLIENNE, PROCÉDÉ DE MONTAGE DE LA FONDATION ET INSTALLATION D'ÉNERGIE ÉOLIENNE

(30) Priority: 16.05.2017 SE 1750609
(43) Date of publication of application: 25.03.2020
(73) Proprietor: Powertower AB, 715 92 Stora Mellösa (SE)
(72) Inventor: KARLSSON, Roger, 715 92 Stora Mellösa (SE); RUIN, Edvard, 731 32 Köping (SE)
(74) Representative: Swea IP Law AB
(86) International application number: PCT/EP2018/062596
(87) International publication number: WO 2018/210864

(56) References cited:
- FR-A1- 2 837 509
- US-A1- 2010 043 318

## Description

### Field of the invention

The present invention relates to a foundation for supporting a wind turbine, wind turbine installation and a method for mounting the foundation. The invention further relates to a wind power installation including the foundation, and a method for mounting the foundation.

### Background of the invention

There are different types of foundations that are used for a wind turbine depending on the location and size of the wind turbine and the properties of the ground, such as whether the ground comprises soil or bedrock. For example, a gravity foundation, that prevents the wind turbine from toppling over by its own weight, can be used. A problem with this type of foundation is that it must be footed at a distance down in the soil, requiring a large amount of soil to be removed before the gravity foundation can be footed. Further, the soil must be replaced over the gravity foundation for it to be stable. Thus, the gravity foundation requires major excavation- and refilling work. Another problem with the gravity foundation is that it requires a large amount of concrete for it to be stable. This is especially true if it's preferred to not foot the gravity foundation at a large depth in the ground. Another method is using a shallow foundation that is prevented from toppling over by due to its large foot. This foundation is placed directly on the ground or just beneath it and makes the wind turbine hard to overturn due to its large foot that spreads over the soil. A disadvantage with this type of shallow foundation is that the soil needs to be compact and have low water levels, otherwise the foundation can become unstable. Further, a large amount of concrete is needed to create the shallow foundation.

Another disadvantage with conventional wind turbine foundation is that transport of the foundation is troublesome due to its weight and size. This often results in that a factory, building the foundation must be placed in close proximity to the wind park in order to decrease the transport distance.

US 2007181767 discloses a wind turbine foundation having a cylindrical base element. The foundation further comprises a plurality of clamped elements arranged around the base element. The clamped elements are attached to the base element and protrude radially from the base element, thus increasing the width of the foundation and thereby reducing the risk of the foundation toppling over. A problem with this solution is the need for good soil quality for the foundation to be stable. Another problem is the large weight and width of the foundation.

US2010/0043318 discloses a foundation of a wind turbine including a central foundation member and a plurality of foundation segments arranged around the central foundation member to form a ring shaped or polygonal foundation element, and which foundation segments are connected to the central foundation member using a plurality of locking elements. This foundation suffers from the same problems as the foundation disclosed in US 2007181767 and mentioned above.

By having a plurality of foundation segments the transport of the foundation is more convenient. Transport of a conventional base element is troublesome due to its weight and size. This often results in that a factory, building the base element must be located in close proximity to the wind park in order to decrease the transport distance.

### Object and summary of the invention

It is an object of the present invention to at least partly overcome the above problems, and to provide an improved foundation for supporting a wind turbine.

This object is achieved by a device as defined in claim 1.

The foundation comprises a plurality of foundation segments extending radially with respect to an axis of symmetry. The foundation segments are attached to each other and arranged so that they form an annular base element for supporting the wind turbine. The annular base element defines the axis of symmetry. At least some of the foundation segments comprise a through hole extending in parallel with the axis of symmetry. The foundation further comprises a plurality of rock anchors extending through the through holes. Each of the rock anchors has an upper end mechanically connected to one of the foundation segments, and a lower end extending below the foundation segments and ending at a distance from the base element. The foundation further also comprises a plurality of anchor elements attached to the lower ends of the rock anchors for anchoring the rock anchors to the ground.

Advantages with the invention is that the width and weight of the foundation can be reduced compared to the prior art foundations, which also reduces the costs and facilitates transportation of the foundation to the wind park. Another advantage with the foundation according to the invention is that the annular base element can be placed directly on the ground. If the ground is a bedrock, the foundation can be placed directly on a bedrock and anchored to the bedrock by means of the rock anchors.

Since the foundation segments are attached to each other and anchored to the ground by means of the rock anchors, there is no need of a central foundation member, which significantly reduces costs and weight of the foundation. Since the rock anchors take up most of the forces caused by pressure and/or traction forces on the foundation, it is not necessary for the foundation to have a large width or having the foundation footed at a large distance down in the soil for it to be stable. The rock anchors can be e.g. wires or bars. By having a plurality of foundation segments making up the annular base element without any central foundation member, the transportation of the foundation is facilitated.

By having an upper end of the rock anchors mechanically connected to a foundation segment and a lower end attached to the ground by means of the anchor elements, the rock anchors stabilize the foundation segments and thus the base element. The rock anchors apply a force on the base element towards the ground and by that improve the stability of the foundation. Thus, the width of the foundation is no longer crucial for stabilisation of the foundation and accordingly, the width of the foundation can be reduced, and consequently the weight of the foundation can also be reduced.

When the foundation is mounted, the axis of symmetry is in parallel with the vertical line.

According to an embodiment of the invention, the rock anchor comprises a wire and the wire is tensed. By tensing the wires, the force on the base element in a direction perpendicular to the ground surface is increased, and accordingly the stabilisation of the foundation is increased. Thus, the annular base element is prevented from tilting or toppling over. Preferably, all of the wires are tensed to the same degree. For example, for a large wind turbine the wires are tensed with a force of at least 2 MN.

According to an embodiment of the invention each of the foundation segments comprises an elongated first portion extending in parallel with the axis of symmetry and having an upper end and a lower end, and a second portion extending perpendicular to the axis of symmetry from an upper end of the first portion towards the axis of symmetry, and the through holes are penetrating through the first portions of the foundation segments. The second portion is attached to the upper end of the first portion. The first portions form the periphery of the base element. Preferably, the foundation segments are L-shaped. Due to the fact that the foundation segments are L-shaped and make up the annular base element, a space will be formed inside the base element which results in a lower weight of the base element compared to if it has been solid.

According to an embodiment of the invention, the foundation segments are made of concrete.

According to an embodiment of the invention, the anchor elements are made of concrete. Concrete is a cheap, strong and stable material which is easy to use.

According to an embodiment of the invention the base element has a central opening, and the second portions of foundation segments extend from the upper end of the first portion towards the central opening. One advantage of having a central opening is that the weight of the base element is further reduced. Another advantage is that the foundation segments can be made less bulky, which facilitates their transportation.

According to an embodiment of the invention, the relation between the diameter of the central opening and the diameter of the base element is between 0.4 m and 0.6 m.

According to an embodiment of the invention, the distance between the annular base element and the lower end of rock anchors is at least 10 m and preferably at least 15 m. The distance between the base element and the lower end depends on the quality and depth of the soil or the bedrock. A longer distance between the annular base element and the lower end of the rock anchors means that more bedrock and soil will keep it in place and prevent it from being pulled up. A distance of more than 10 m and preferably more than 15 m is thus preferred to prevent the anchor element to be pulled up if the wind turbine is subjected to a large force.

According to an embodiment of the invention the periphery of the base element has a polygonal shape. Having a polygonal shape is an advantage when constructing the base element since it's far easier to create a polygonal shape from a plurality of base elements than e.g. to create a perfect circular shape from the base elements.

According to an embodiment of the invention, the foundation comprises at least one connection member for attaching the wind turbine to the annular base element and to join the foundation segments together so they form the base element. The connection member comprises a first annular member arranged coaxial with the base element and attached to an upper surface of the foundation segments by means of a plurality of fastening members. The first annular member is adapted to engage with a receiving portion of the wind turbine. For example, the first annular member is a metal ring, and the fastening members are bolts. This embodiment provides an uncomplicated, fast and cheap method for connecting together the wind turbine and foundation segments.

According to an embodiment of the invention the one or more connection members further comprise a second annular member arranged coaxial with the base element and connected to a lower surface of the second portion, and the plurality of fastening members fixedly connects the first annular member to the second annular member on different sides of the second portion. The first and second annular members are disposed on opposite sides of the second portion of the foundation segments. Using a second annular member improves the connection between the foundation segments.

According to an embodiment of the invention the radial width of the second portion of the base element is between 0.7 m and 1.5 m. With radial width of the second portion is meant the width of the second portion in a radial direction, i.e. perpendicular to the axis of symmetry. By having a radial width between 0.7 m and 1.5 m enough stability is achieved on the base element, and the radial width is also enough for fastening different types of wind turbines onto the base element considering the width of the receiving portion of the wind turbine. Having a radial width larger than 1.5 m increases the amount of concrete needed to complete the foundation segments, which in turn results in a higher weight and a higher cost.

According to an embodiment of the invention the radial width of the first portion 30 of the base element is between 0.3 m and 0.8 m. With radial width of the first portion is meant the width of the first portion in a radial direction, i.e. perpendicular to the axis of symmetry. Having a radial width of the first portion over 0.3 m is an advantage considering the strength of the base element and the weight on it applied by the wind turbine. Having a radial width of the first portion less than 0.8 m reduces the weight of the foundation segment. A foundation segment with low weight facilitates the construction and the transport of the foundation segment.

According to an embodiment of the invention the height of the base element is between 2 - 24 m, and preferably between 5-12 m. This allows the foundation segments to be easily transported to the desired location of the wind turbine by means of e.g. trucks. The energy production of the wind turbine depends on the height of the wind power plant. The higher base element, the larger is the energy production of the wind power plant. A foundation segment with a height of 5-12 m can be transported in a conventional manner, but a foundation segment higher than that is more complicated to transport. This can, however, be achieved by connecting two or more foundation segments on top of each other so the foundation segments can reach a height up to 24m. Since these foundation segments can be transported on a truck, the factory that builds the foundation segments can be located far away from the wind turbine's building site. This makes building a wind park far easier than if the factory producing the foundation segments would need to be built at the site.

Another object of the invention is to provide an improved wind power installation. This object is achieved by the wind power installation according to claim 13.

The wind power installation comprises a foundation according to the invention and a wind turbine mounted on the annular base element. The wind turbine is attached to the base element, and the foundation is fixedly attached to the ground by means of the rock anchors. For example, the wind turbine is fixedly attached to the annular base element by means of the first annular member.

According to an embodiment of the invention the lower end of the rock anchors is attached to a bedrock by means of the anchor elements. The bedrock is far more durable and stable than soil.

According to an embodiment of the invention, the bedrock is provided with a plurality of drilled holes and the rock anchors extend through the drilled holes, and the anchor elements comprise solidified concrete disposed in a lower part of the drilled holes. The concrete making up the anchor elements is poured down the drilled holes where it solidifies around a lower part of the rock anchors and creates the anchor elements. Thereafter, the rock anchors are preferably tensed.

A further object of the present invention is to provide a method for mounting the foundation according to the invention. This object is achieved by the method according to claim 15.

The method comprises drilling a plurality of drill holes in the ground, disposing the rock anchors in the drill holes, creating the anchor elements by pouring concrete through the drill holes to a lower part of the rock anchors, and waiting until the concrete has solidified, threading the rock anchors through the through holes of the foundations segments, arranging the foundation segments on the ground so that they form the annular base element, attaching the foundation segments to each other, connecting the upper ends of the rock anchors to the foundation segments. Some of the method steps can be carrying out in different order. For example, the rock anchors can be threaded through the through holes of the foundations segments at the same time as the foundation segments are arranged so that they form the annular base element. Preferably, the method comprises providing a tension to the rock anchors before connecting the upper ends of the rock anchors to the foundation segments. Using concrete is an easy and durable method for creating the anchor elements since it's in a liquid form when applied and can seep into crevices in the bedrock before solidifying binding the rock anchor to the bedrock.

### Brief description of the drawings

The invention will now be explained more closely by the description of different embodiments of the invention and with reference to the appended figures.
- Fig. 1a: shows an example of a foundation for supporting a wind turbine, according to the invention, seen in a perspective view.
- Fig. 1b: shows the foundation of fig 1a from a top view with only the annular base element visible.
- Fig. 2a: shows a side view of an example of a foundation segment.
- Fig. 2b: shows a perspective view of an example of a foundation segment connected to a connection member.
- Fig. 3: shows the annular base element from a top view with a plurality of connection holes.
- Fig. 4: shows two foundation segments connected to the connection member.
- Fig. 5: shows an example of the foundation segment from figure 2b having a rock anchor extending through a layer of soil and connected to a bedrock.
- Fig. 6: shows the foundation segment from figure 5 with the rock anchor fixedly connected to the bedrock by means of an anchor element.
- Fig. 7: shows an example of a wind power installation according to the invention.

### Detailed description of preferred embodiments of the invention

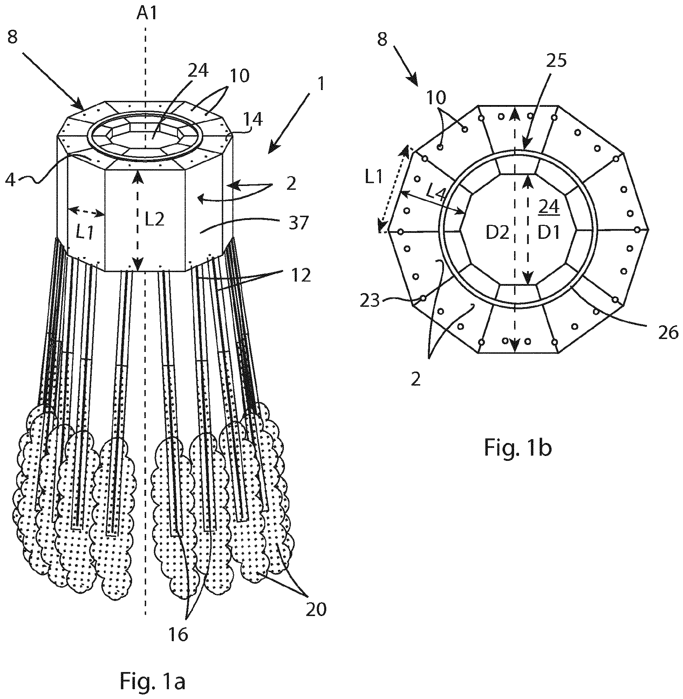

Figures 1a-b show a foundation 1 for supporting a wind turbine according to an embodiment of the invention seen in a perspective view and a top view. The foundation 1 comprises a plurality of foundation segments 2 extending radially with respect to an axis of symmetry A1. The foundation segments 2 are attached to each other and arranged so that they form an annular base element 8. Preferably, the foundation segments 2 are made of concrete. The number of foundation segments 2 may vary. Typically, the number of foundation segments 2 may vary between 8 and 14, and preferably between 10 and 12. In this example, the foundation 1 comprises 10 foundation segments 2. The annular base element 8 is adapted to support the wind turbine. The annular base element 8 defines the axis of symmetry A1, which can also be following referred to as a centre axis of the foundation 1. At least some of the foundation segments 2 are provided with one or more through holes 10 extending in parallel with the axis of symmetry A1. Preferably, each of the foundation segments 2 is provided with at least one through hole 10, and preferably at least two through holes as shown in figures 1a-b in order to increase the stability of the foundation.

The foundation 1 further comprises a plurality of rock anchors 12 extending through the through holes 10. Each of the rock anchors 12 has an upper end 14 mechanically connected to one of the foundation segments 2 and a lower end 16 extending below the foundation segments and ending at a distance from the annular base element 8. The foundation 1 also comprises a plurality of anchor elements 20 attached to the lower ends 16 of the rock anchors 12 for anchoring the rock anchors to the ground. The rock anchors 12 extend in a vertical direction through entire foundation element, and are attached to an upper side 4 of the foundation element. Different means can be used for attaching the rock anchors to the foundation element. Each of the rock anchors 12 extends from the annular base element 8 to the lower end 16, which is attached to the ground.

The lower ends 16 of the rock anchors 12 are connected to the ground, for example to a bedrock, by means of the anchor elements 20. The material of the anchor elements is preferably made up of a liquid that solidifies after a certain time, thereby attaching the rock anchors 12 to the ground. In this embodiment the anchor elements 20 are made of concrete that has been poured through a plurality of drill holes where the rock anchors have been inserted. The concrete will then fill crevices in the bedrock and bind the lower ends 16 of the rock anchors 12 to the concrete. Thus, when the concrete solidifies the rock anchors will be fixedly connected to the bedrock. In this embodiment the rock anchors 12 are wires that has been tensed in order to increase the rock anchors pulling force on the annular base element 8 for preventing tilting of the foundation 1. The force needed to tense the wires satisfactory depends on the size and shape of the foundation 1 and the size and shape of the wind turbine mounted on the foundation. Suitably, the tension force on the wires is more than 2 MN.

In this embodiment, the annular base element 8 has a central opening 24 free from material, such as concrete. This results in that the base element has a relatively low weight since less material is needed to form the base elements compared to if the base element would be compact. The diameter D2 of the base element is suitably between 0.7 and 1.5 m. The relation between the diameter D1 of the central opening 24 and the diameter D2 of the base element is, for example, between 0.4 m and 0.6 m. For example, the diameter D2 of the base element is 4 m, and the diameter D1 of the central opening 24 is 2 m.

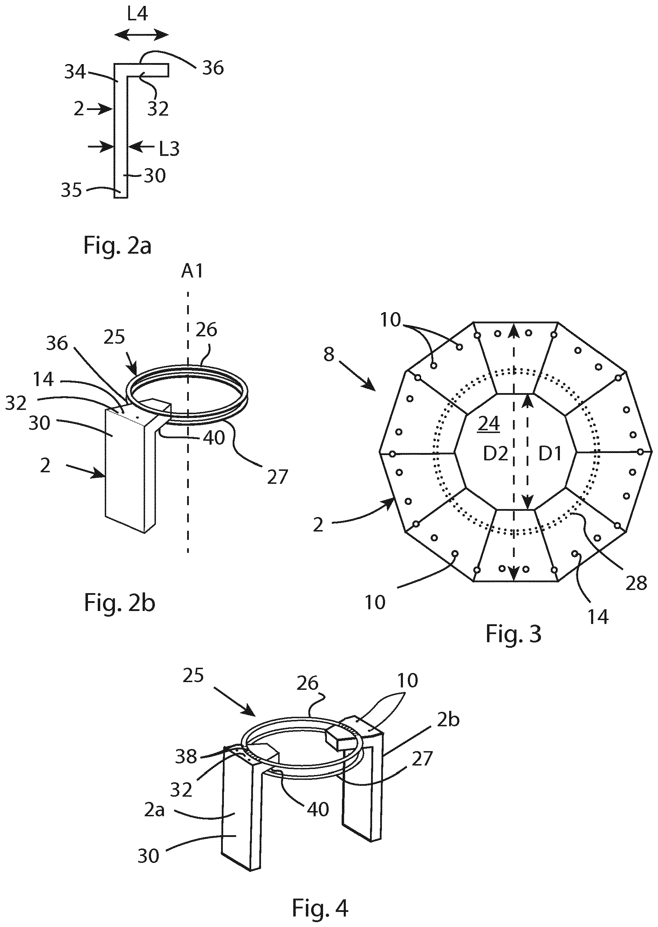

Figure 2a shows a side view of one of the foundation segments 2, and figure 2b shows a perspective view of the foundation segment 2. In this embodiment the foundation segments 2 are L-shaped. However, the foundation segments can also be T-shaped. Each of the foundation segments 2 has an elongated first portion 30 extending in parallel with the axis of symmetry A1.

The first portions 30 form the periphery of the annular base element 8. The first portion 30 has an upper end 34 and a lower end 35. The lower ends 35 of the first portion 30 are resting of the ground when the foundation is mounted. In this embodiment, the first portion 30 is shaped as a rectangular plate having two parallel sides. The foundation segments 2 also comprise a second portion 32 extending radially, i.e. perpendicular to the axis of symmetry A1. The second portion 32 extends radially from the upper end 34 of the first portion 30 towards the axis of symmetry A1 of the annular base element 8 In an alternative embodiment, the second portion may also extend radially from the upper end 34 of the first portion 30 away from the axis of symmetry A1 so that the foundation segment has a T-shaped cross-section. The second portion 32 is tapering towards the axis of symmetry A1, as shown in figure 2b. Thus, the width of the second portion decreases uniformly towards the axis of symmetry A1. In this example, the second portion 32 has its largest width at the upper end 34 of the first portion 3. If the foundation segment is T-shaped, the second portion 32 has its largest width outside the first portion. This allows the foundation segments 2 to fit together so no gap is formed between the foundation segments when they are mechanically connected to each other. Each of the foundation segments 2 has an upper surface 36 extending perpendicular to the axis of symmetry A1 and an outer surface 37, as seen in fig 1a, facing away from the annular base element 8. In this embodiment, the outer surface 37 is straight. Thus, foundation segments 2 form a polygon shaped annular base element 8. However, in another embodiment, the outer surface of the foundation segments could be curved and form a circular base element 8.

The height L2 of the foundation segment is larger than the width L1 of the foundation segment, as shown in figure 1a. The height L2 of the foundation segment 2 along the axis of symmetry A1 defines the height of the base element 8 and is suitably between 2 and 25 m, and preferably between 5 and 10 m in order to facilitate transportation of the segments. The width L1 of the foundation segment 2 depends on the number of segments in the base element. Suitably, the height L2 of the foundation segment is at least twice as large as the width L1, and preferably at least three times as large as the width L1. The second portion 32 has a radial width L4 that is larger than the radial width L3 of the first portion 30, as shown in figure 2a. With the term radial width is meant the thickness in a radial direction. Preferably, the radial width L4 of the second portion 32 is at least twice as large as the radial width L3 of the first portion 30 in order to reduce the weight of the base element. For example, the radial width L3 of the first portion 30 is between 0.3 and 0.8 m, and typically about 0.5 m, and the radial width L4 of the second portion 32 is between 0.7 and 1.5 m, and typically about 1m. The foundation 1 comprises attachment means for attaching the foundation segments 2 to each other. The attachment means can be designed in many different ways. In this embodiment, each foundation segments 2 comprises two attachment rings 23 shown in fig 1b. The attachment rings 23 are connected to an upper side 4 of the foundation segment. The attachment rings 23 of one of the foundation segments 2 are adapted to overlap the attachment rings 23 of the foundation segments next to it, and a rebar (not shown) is adapted to be inserted through the attachment rings 23 and partially lock the foundation segments 2 together.

Figure 2b shows a perspective view of a foundation segment 2 connected to a connection member 25 for attaching a wind turbine to the base element 8, and for joining the foundation segments 2 together. The connection member 25 comprises a first annular member 26 arranged coaxial with the annular base element 8, and attached to the upper surface 36 of the foundation segments. In this embodiment, the connection member 25 further comprises a second annular member 27 arranged coaxial with the annular base element 8 and connected to a lower surface 40 of the second portion 32. The first and second annular members 26, 27 are disposed on opposite sides of the second portion 32. The first and second annular members 26, 27 are, for example, metal rings, and are further referenced as a first and a second connection rings 26, 27. The first and second connection rings 26, 27 join the foundation segments 2 together to form the annular base element 8. The other foundation segments making up the annular base element are not shown in figure 2b, but have the same shape and are connected to the connection rings 26, 27 in the same way as the foundation segment shown in the figure.

Figure 3 shows the base element 8 from above with all the foundation segments and a plurality of connection holes 28 surrounding the central opening 24. Figure 4 shows two foundation segments 2a, 2b connected to the connection member 25. The first connection ring 26 is fixedly connected to each of the foundation segments 2a, 2b by fastening members 38. In this embodiment the fastening members 38 are a plurality of connection bolts extending through the connection holes 28, as seen in figure 4. The first connection ring 26 comprises a flange (not shown) adapted to receive a receiving portion (not shown) of a wind turbine and thereby locking the wind turbine to the foundation 1.

The second connection ring 27 is arranged on the lower surface 40 of the second portion 32 of the foundation segment 2. The second connection ring 27 is arranged at a distance from the first connection ring 26 along the axis of symmetry A1. The second connection ring 27 is fixedly connected to the first connection ring 26 by means of the plurality of fastening members 38. By tightening the fastening members 38, the connection between the first and the second connection rings 26, 27 is tightened and accordingly their connection to the foundation segments 2. Thus, the first and the second connection rings 26, 27 cooperate and join the foundation segments 2 together and prevent them from separating. Further, the first connection ring 26 connects the wind turbine to the foundation 1.

In this embodiment, the annular base element 8 is provided with two rows of connection holes 28, as seen in figure 3. The connection holes 28 are disposed in the second portions 32 of the foundation members 2. The first and the second connection rings 26, 27 are provided with connection holes (not shown) matching and aligned with the connection holes 28 to allow the fastening members 38, for example bolts, to penetrate through the first and the second connection rings 26, 27 as well as the second portions 32 of the foundation members 2.

The connection members 25 are adapted to be inserted through the holes of the connection rings 26, 27 and the connection holes 28 and tightened to an extent, thus connecting the first and the second connection rings 26, 27 to the foundation segments 2. Scaffolds (not shown) can be used for setting up the foundation segments 2 so that they stand in the correct position.

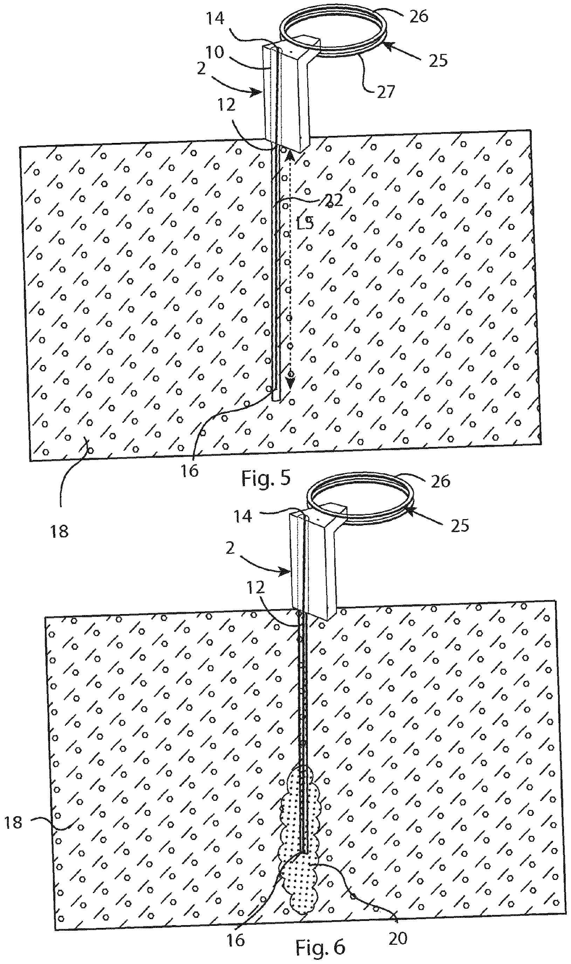

Figure 5 shows the foundation segment 2 from figure 3 having a rock anchor 12 extending to a bedrock 18. Figure 6 shows the foundation segment 2 with the rock anchor 12 fixedly connected to the bedrock 18 by means of an anchor element 20. A plurality of drill holes 22 extends through the bedrock and ends at a distance down in the bedrock 18. The extension angle of the drill hole 22 differs from the angle of the axis of symmetry in about 2-10 degree but in other embodiments, the extension angle can differ both less and more. The rock anchor 12 is connected to the foundation segment 2 and extends through the drill hole 22 at a distance L5 down in the bedrock 18. The distance L5 between the base element 8 and the lower end 16 of the rock anchors 12 is more than 10, and preferably more than 15 m. The distance L5 depends on the size of the wind turbine and the quality of the bedrock. In this example, the distance L5 between the base element 8 and the lower end 16 of the rock anchors is about 20 m. This is to ensure that the rock anchors are connected firmly in the bedrock.

In figure 6 the drill hole has been partly filled with concrete enclosing a lower end 16 of the rock anchor 12 and forming an anchor element 20. In this embodiment, the drill hole 22 has been filled with concrete to such an extent that the part of the drill hole 22 that extends through the bedrock 18 has been completely filled. This increases the stability of the drill hole 22 and prevents it from caving in by means of pressure caused by tensions in the bedrock 18.

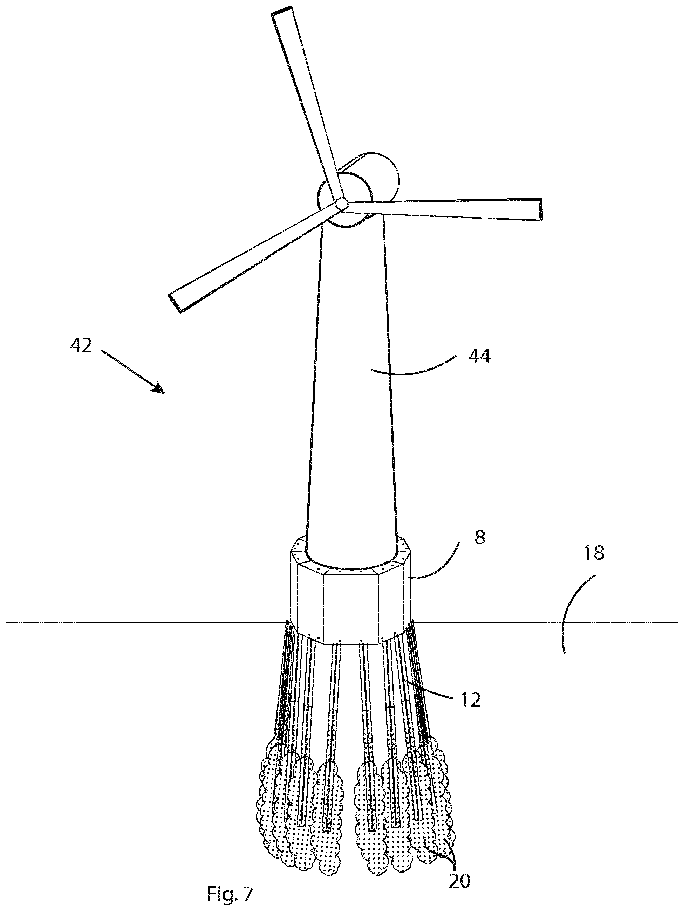

Figure 7 shows an example of a wind power installation 42 according to the invention comprising a wind turbine 44 attached to the annular base element 8, and the foundation is fixedly attached to ground by means of the rock anchors 12. The lower ends of the rock anchors 12 are attached to a bedrock 18 by means of the anchor elements 20.

A method for mounting the wind turbine is now explained with reference to figures 2b-6.

A plurality of drill holes 22 are drilled in the ground preferably reaching a distance down through a bedrock 18. The rock anchors are disposed in the drill holes and the lower ends of the rock anchors are connected to lower ends of the drill holes. Concrete are then poured down each of the drill holes 22 until a lower part of the rock anchors 12 are covered by concrete. At least the part of the drill holes 22 that goes through the bedrock 18 is filled with concrete. The concrete is solidified, thus creating the anchor elements 20.

The rock anchors 12 are preferably threaded through the through holes 10 of the foundations segments 2 before the foundations segments are in a standing position. The base element 8 is then constructed by setting up the first foundation segment 2a in a standing position as seen in figure 2b by means of e.g. scaffolds (not shown). The connection rings 26,27 are connected to the first foundation segment 2a by means of the connection members 25.

The connection members 25 are inserted through the holes of the connection rings 26, 27 and the connection holes 28 and tightened to an extent, thus connecting the first and the second connection rings 26, 27 to the foundation segment 2a. The next foundation segment that are to be connected, is then lifted up by means of the scaffolds and the first and the second connection rings 26, 27 are connected to it by means of the connection holes 28 made in the that foundation segment. To increase the connection between the two foundation segments a rebar is inserted through their overlapping attachment rings 23. After connecting a plurality of foundation segments 2, the foundation becomes more stable and could stand on its own without the need for support of the scaffold. However, for safety reasons, scaffolds could still be used when connecting the rest of the foundation segments 2. When all the foundation segments 2 have been connected, the periphery of the base element 8 is formed and the connection members 25 are tightened a bit. The upper ends 14 of the anchor elements 12 are then mechanically connected to the foundation segments 2 and are tightened so that it achieves a tension force of at least 2MN. The foundation 1 is then complete and is adapted to receive a wind turbine and lock it to the foundation by means of the connection members 25 which are further tightened when the wind turbine has been received.

The present invention is not limited to the embodiments disclosed but may be varied and modified within the scope of the following claims. For example, the number of foundation segments may vary. Further, the number of through holes in each segment can be one, or more than two. The second portion of the foundation segment may also extend in a direction away from the axis of symmetry so that the foundation segment has a T-shaped cross section. Thus, a bearing collar is formed around the annular base element when the foundation segments are attached to each other and arranged so that they form the annular base element This bearing collar can, for example, be used to walk on thus facilitate for maintenance staff to walk around the foundation.

The foundation can also be used for wind turbines located in a sea. In such case, the annular base element can be arranged on a support device filled with ballast. The support device is resting on the seabed.

## Claims

1. A foundation (1) for supporting a wind turbine, wherein the foundation comprises a plurality of foundation segments (2) extending radially with respect to an axis of symmetry (A1), wherein the foundation segments (2) are attached to each other and arranged so that they form an annular base element (8) for supporting the wind turbine, wherein the base element (8) defines the axis of symmetry, each of the foundation segments (2) has an elongated first portion (30) extending in parallel with the axis of symmetry (A1), and a second portion (32) extending perpendicular to the axis of symmetry (A1), **characterized in that** at least some of the foundation segments (2) are provided with one or more through holes (10) extending in parallel with the axis of symmetry (A1), the foundation (1) comprises a plurality of rock anchors (12) extending through said through holes, wherein each of the rock anchors (12) has an upper end (14) mechanically connected to one of the foundation segments (2) and a lower end (16) extending below the foundation segments and ending at a distance from the annular base element (8), and anchor elements (20) attached to the lower ends (16) of said rock anchors (12) for anchoring the rock anchors (12) to the ground, wherein each of the second portions (32) extend from an upper end of the first portion (30) towards the axis of symmetry so that the elongated first portions (30) form the periphery of the base element, and said through holes (10) are penetrating through the first portions of the foundation segments.

2. The foundation according to claim 1, wherein the annular base element (8) has a central opening (24), and the second portions (32) of the foundation segments extend from the upper end of the first portion (30) towards the central opening.

3. The foundation according to claim 2, wherein the relation between the diameter of the central opening and the diameter of the base element is between 0.4 m and 0.6 m.

4. The foundation according to any of the previous claims, wherein the rock anchors (12) comprise a wire and the wire is tensed.

5. The foundation according to any of the previous claims, wherein the distance (L5) between the annular base element (8) and the lower end (16) of the rock anchors (12) is at least 10 m and preferably at least 15 m.

6. The foundation according to any of the previous claims, wherein the periphery of the annular base element (8) has a polygonal shape.

7. The foundation according to any of the previous claims, wherein the foundation comprises a connection member (25) for attaching the wind turbine to the annular base element (8) and for joining the foundation segments (2) together so they form the base element (8), and the connection member (25) comprise a first annular member (26) arranged coaxial with the annular base element, and attached to an upper surface (36) of the foundation segments (2) by means of a plurality of fastening members (38).

8. The foundation according to claim 7, wherein the connection member (25) further comprises a second annular member (27) arranged coaxial with the annular base element (8) and connected to a lower surface (40) of the second portion (32), and the first and second annular members are disposed on opposite sides of the second portion (32).

9. The foundation according to claim 1, wherein the radial width (L4) of the second portion (32) of the annular base element (8) is between 0.7 m and 1.5 m.

10. The foundation according to claim 1, wherein the radial width (L3) of the first portion (L3) of the annular base element (8) is between 0.3 m and 0.8 m.

11. The foundation according to any of the previous claims, wherein the height (L2) of the annular base element (8) is between 2-24 m, and preferably between 5-12 m.

12. A wind power installation comprising a foundation and a wind turbine mounted on the foundation, wherein the foundation is a foundation (1) according to any of the claims 1 -11, the wind turbine is attached to the annular base element (8), and the foundation is fixedly attached to the ground by means of the rock anchors (12).

13. The wind power installation according to claim 12, wherein the lower end (16) of the rock anchors (12) is attached to a bedrock (18) by means of the anchor elements (20).

14. A method for mounting the foundation (1) according to claim 1 to ground, wherein the method comprises:
- drilling a plurality of drill holes (22) in the ground,
- disposing the rock anchors (12) in the drill holes (22),
- creating the anchor elements (20) by pouring concrete through the drill holes (22) to a lower part of the rock anchors (12), and waiting until the concrete has solidified,
- threading the rock anchors (12) through the through holes (10) of the foundations segments,
- arranging the foundation segments (2) on the ground so that they form the annular base element (8),
- attaching the foundation segments (2) to each other, and
- connecting the upper ends (14) of the rock anchors (12) to the foundation segments.

## Patentansprüche

1. Fundament (1) zum Stützen einer Windturbine, wobei das Fundament eine Vielzahl von Fundamentsegmenten (2) umfasst, die sich radial in Bezug auf eine Symmetrieachse (A1) erstrecken, wobei die Fundamentsegmente (2) aneinander befestigt und so angeordnet sind, dass sie ein ringförmiges Basiselement (8) zum Stützen der Windturbine bilden, wobei das Basiselement (8) die Symmetrieachse definiert, jedes der Fundamentsegmente (2) einen länglichen ersten Abschnitt (30), der sich parallel zu der Symmetrieachse (A1) erstreckt, und einen zweiten Abschnitt (32) aufweist, der sich senkrecht zu der Symmetrieachse (A1) erstreckt, **dadurch gekennzeichnet, dass** mindestens einige der Fundamentsegmente (2) mit einem oder mehreren Durchgangslöchern (10) versehen sind, die sich parallel zu der Symmetrieachse (A1) erstrecken, das Fundament (1) eine Vielzahl von Felsankern (12) umfasst, die sich durch die Durchgangslöcher erstrecken, wobei jeder der Felsanker (12) ein oberes Ende (14), das mechanisch mit einem der Fundamentsegmente (2) verbunden ist, und ein unteres Ende (16) aufweist, das sich unter den Fundamentsegmenten erstreckt und in einem Abstand von dem ringförmigen Basiselement (8) endet, und Ankerelemente (20), die an den unteren Enden (16) der Felsanker (12) befestigt sind, zum Verankern der Felsanker (12) im Boden, wobei jeder der zweiten Abschnitte (32) sich von einem oberen Ende des ersten Abschnitts (30) zu der Symmetrieachse hin erstreckt, sodass die länglichen ersten Abschnitte (30) den Umfang des Basiselements bilden, und wobei die Durchgangslöcher (10) die ersten Abschnitte der Fundamentsegmente durchdringen.

2. Fundament nach Anspruch 1, wobei das ringförmige Basiselement (8) eine zentrale Öffnung (24) aufweist und die zweiten Abschnitte (32) der Fundamentsegmente sich von dem oberen Ende des ersten Abschnitts (30) zu der zentralen Öffnung hin erstrecken.

3. Fundament nach Anspruch 2, wobei die Beziehung zwischen dem Durchmesser der zentralen Öffnung und dem Durchmesser des Basiselements zwischen 0,4 m und 0,6 m beträgt.

4. Fundament nach einem der vorstehenden Ansprüche, wobei die Felsanker (12) einen Draht umfassen und der Draht gespannt ist.

5. Fundament nach einem der vorstehenden Ansprüche, wobei der Abstand (L5) zwischen dem ringförmigen Basiselement (8) und dem untere Ende (16) der Felsanker (12) mindestens 10 m und vorzugsweise mindestens 15 m beträgt.

6. Fundament nach einem der vorstehenden Ansprüche, wobei der Umfang des ringförmigen Basiselements (8) eine polygonale Form aufweist.

7. Fundament nach einem der vorstehenden Ansprüche, wobei das Fundament ein Verbindungselement (25) zum Befestigen der Windturbine an dem ringförmigen Basiselement (8) und zum Zusammenfügen der Fundamentsegmente (2) umfasst, sodass sie das Basiselement (8) bilden, und das Verbindungselement (25) ein erstes ringförmiges Element (26) umfasst, das koaxial mit dem ringförmigen Basiselement angeordnet und mittels mehrerer Befestigungselemente (38) an einer oberen Oberfläche (36) der Fundamentsegmente (2) befestigt ist.

8. Fundament nach Anspruch 7, wobei das Verbindungselement (25) ferner ein zweites ringförmiges Element (27) umfasst, das koaxial mit dem ringförmigen Basiselement (8) angeordnet und mit einer unteren Oberfläche (40) des zweiten Abschnitts (32) verbunden ist, und das erste und das zweite ringförmige Element auf gegenüberliegenden Seiten des zweiten Abschnitts (32) angeordnet sind.

9. Fundament nach Anspruch 1, wobei die radiale Breite (L4) des zweiten Abschnitts (32) des ringförmigen Basiselements (8) zwischen 0,7 m und 1,5 m beträgt.

10. Fundament nach Anspruch 1, wobei die radiale Breite (L3) des ersten Abschnitts (L3) des ringförmigen Basiselements (8) zwischen 0,3 m und 0,8 m beträgt.

11. Fundament nach einem der vorstehenden Ansprüche, wobei die Höhe (L2) des ringförmigen Basiselements (8) zwischen 2-24 m und vorzugsweise zwischen 5-12 m beträgt.

12. Windenergieanlage, umfassend ein Fundament und eine auf dem Fundament montierte Windturbine, wobei das Fundament ein Fundament (1) nach einem der Ansprüche 1 - 11 ist, die Windturbine an dem ringförmigen Basiselement (8) befestigt ist und das Fundament mittels der Felsanker (12) fest an dem Boden angebracht ist.

13. Windenergieanlage nach Anspruch 12, wobei das untere Ende (16) der Felsanker (12) mittels der Ankerelemente (20) an einem Felsuntergrund (18) angebracht ist.

14. Verfahren zum Montieren des Fundaments (1) nach Anspruch 1 am Boden, wobei das Verfahren umfasst:
- Bohren einer Vielzahl von Bohrlöchern (22) in den Boden,
- Anordnen der Felsanker (12) in den Bohrlöchern (22),
- Erzeugen der Ankerelemente (20) durch Gießen von Beton durch die Bohrlöcher (22) in einen unteren Teil der Felsanker (12) und Warten, bis der Beton erstarrt ist,
- Einfädeln der Felsanker (12) durch die Durchgangslöcher (10) der Fundamentsegmente,
- Anordnen der Fundamentsegmente (2) auf dem Boden, sodass sie das ringförmige Basiselement (8) bilden,
- Befestigen der Fundamentsegmente (2) aneinander und
- Verbinden der oberen Enden (14) der Felsanker (12) mit den Fundamentsegmenten.

## Revendications

1. Fondation (1) permettant de porter une éolienne, dans laquelle la fondation comprend une pluralité de segments de fondation (2) s'étendant radialement par rapport à un axe de symétrie (A1), les segments de fondation (2) étant fixés les un aux autres et agencés de telle sorte qu'ils forment un élément de base annulaire (8) pour porter l'éolienne, l'élément de base (8) définissant l'axe de symétrie, chacun des segments de fondation (2) ayant une première partie allongée (30) s'étendant parallèlement à l'axe de symétrie (A1), et une seconde partie (32) s'étendant perpendiculairement à l'axe de symétrie (A1), **caractérisée en ce que** au moins certains des segments de fondation (2) sont pourvus d'un ou de plusieurs trous traversants (10) s'étendant parallèlement à l'axe de symétrie (A1), la fondation (1) comprend une pluralité d'ancrages de roche (12) s'étendant à travers lesdits trous traversants, chacun des ancrages de roche (12) ayant une extrémité supérieure (14) reliée mécaniquement à l'un des segments de fondation (2) et une extrémité inférieure (16) s'étendant sous les segments de fondation et se terminant à une distance de l'élément de base annulaire (8), et des éléments d'ancrage (20) fixés aux extrémités inférieures (16) des dits ancrages de roche (12) pour ancrer les ancrages de roche (12) au sol, chacune des secondes parties (32) s'étendant à partir d'une extrémité supérieure de la première partie (30) vers l'axe de symétrie de telle sorte que les premières parties allongées (30) forment la périphérie de l'élément de base, et lesdits trous traversants (10) pénétrant à travers les premières parties des segments de fondation.

2. Fondation selon la revendication 1, dans laquelle l'élément de base annulaire (8) a une ouverture centrale (24), et les secondes parties (32) des segments de fondation s'étendent à partir de l'extrémité supérieure de la première partie (30) vers l'ouverture centrale.

3. Fondation selon la revendication 2, dans laquelle le rapport entre le diamètre de l'ouverture centrale et le diamètre de l'élément de base est compris entre 0,4 m et 0,6 m.

4. Fondation selon l'une quelconque des revendications précédentes, dans laquelle les ancrages de roche (12) comprennent un fil et le fil est tendu.

5. Fondation selon l'une quelconque des revendications précédentes, dans laquelle la distance (L5) entre l'élément de base annulaire (8) et l'extrémité inférieure (16) des ancrages de roche (12) est d'au moins 10 m et de préférence d'au moins 15 m.

6. Fondation selon l'une quelconque des revendications précédentes, dans laquelle la périphérie de l'élément de base annulaire (8) est de forme polygonale.

7. Fondation selon l'une quelconque des revendications précédentes, dans laquelle la fondation comprend un élément de liaison (25) pour fixer l'éolienne à l'élément de base annulaire (8) et pour joindre les segments de fondation (2) ensemble afin de former l'élément de base (8), et l'élément de liaison (25) comprend un premier élément annulaire (26) disposé de manière coaxiale par rapport à l'élément de base annulaire, et fixé à une surface supérieure (36) des segments de fondation (2) au moyen d'une pluralité d'éléments de fixation (38).

8. Fondation selon la revendication 7, dans laquelle l'élément de liaison (25) comprend en outre un second élément annulaire (27) disposé de manière coaxiale par rapport à l'élément de base annulaire (8) et relié à une surface inférieure (40) de la seconde partie (32), et les premier et second éléments annulaires sont disposés sur des côtés opposés de la seconde partie (32).

9. Fondation selon la revendication 1, dans laquelle la largeur radiale (L4) de la seconde partie (32) de l'élément de base annulaire (8) est comprise entre 0,7 m et 1,5 m.

10. Fondation selon la revendication 1, dans laquelle la largeur radiale (L3) de la première partie (L3) de l'élément de base annulaire (8) est comprise entre 0,3 m et 0,8 m.

11. Fondation selon l'une quelconque des revendications précédentes, dans laquelle la hauteur (L2) de l'élément de base annulaire (8) est comprise entre 2 et 24 m, et de préférence entre 5 et 12 m.

12. Installation à énergie éolienne comprenant une fondation et une éolienne montée sur la fondation, dans laquelle la fondation est une fondation (1) selon l'une quelconque des revendications 1 à 11, l'éolienne est fixée à l'élément de base annulaire (8), et la fondation est fixée de manière fixe au sol au moyen des ancrages de roche (12).

13. Installation à énergie éolienne selon la revendication 12, dans laquelle l'extrémité inférieure (16) des ancrages de roche (12) est fixée à une roche-mère (18) au moyen des éléments d'ancrage (20).

14. Procédé de montage de la fondation (1) au sol selon la revendication 1, dans lequel le procédé comprend :
- le forage d'une pluralité de trous de forage (22) dans le sol,
- le placement des ancrages de roche (12) dans les trous de forage (22),
- la création des éléments d'ancrage (20) en versant du béton à travers les trous de forage (22) jusqu'à une partie inférieure des ancrages de roche (12), et en attendant que le béton se soit solidifié,
- le filetage des ancrages de roche (12) à travers les trous traversants (10) des segments de fondations,
- l'agencement des segments de fondation (2) au sol de telle sorte qu'ils forment l'élément de base annulaire (8),
- la fixation des segments de fondation (2) entre eux, et
- la liaison des extrémités supérieures (14) des ancrages de roche (12) aux segments de fondation.
